# EUROPÄISCHE PATENTSCHRIFT

(11) **EP 2 161 153 B1**
(45) Veröffentlichungstag und Bekanntmachung des Hinweises auf die Patenterteilung: **10.04.2013**
(21) Anmeldenummer: 09011259.0
(22) Anmeldetag: 02.09.2009
(51) Int. Cl.: B60J 7/06

(54) **Aufbau mit einem beweglichen Dach für einen Personenkraftwagen**
Assembly with a mobile roof for a passenger vehicle
Montage doté d'un toit mobile pour un véhicule de transport de personnes

(30) Priorität: 03.09.2008 DE 102008045574
(43) Veröffentlichungstag der Anmeldung: 10.03.2010
(73) Patentinhaber: Magna Car Top Systems GmbH, 74321 Bietigheim-Bissingen (DE)
(72) Erfinder: Bergerhoff, Harald, D-71636 Ludwigsburg (DE); Käsweber, Hubert, D-71636 Ludwigsburg (DE); Wolf, Philipp, 70191 Stuttgart (DE); Reichel, Johannes, D-71254 Ditzingen (DE)
(74) Vertreter: Völger, Silke Beatrix

(56) Entgegenhaltungen:
- EP-A- 1 078 799
- DE-A1-102004 017 569
- DE-A1-102005 028 190

## Beschreibung

Die Erfindung bezieht sich auf einen Aufbau mit einem beweglichen Dach für einen Personenkraftwagen nach dem Oberbegriff des Patentanspruchs 1. DE 10 2004 017 569 A offenbart einen solchen Aufbau.

Es ist ein Kraftwagen mit einem Dachmodul bekannt, DE 101 56 350 B4, bei dem ein Schiebedeckel oberflächenbündig zu einer Ausgleichsleiste in ein Dach eingesetzt ist. Die Ausgleichsleiste verläuft oberhalb eines seitlichen Dachrahmens der Teil einer Rahmenstruktur eines Aufbaus ist, Der Dachrahmen setzt sich aus mehreren profilierten Trägerabschnitten zusammen. Einer dieser Trägerabschnitte weist eine Wand auf, die in etwa parallel zu einer unteren Begrenzung der Ausgleichsleiste verläuft. Zwischen Wand und Begrenzung sind zur Halterung der Ausgleichsleiste an dem benachbarten Trägerabschnitt Klebestränge vorgesehen. Ausgleichsleiste und Dachrahmen werden seitlich von einem Türrahmen begrenzt. Dabei wirken der Türrahmen und der Dachrahmen mit Ausgleichsleiste unter Vermittlung von Dichtkörpem zusammen.

Die US 200310214157 A1 befasst sich mit einem Fahrzeug insbesondere Limousine oder Coupe, das ein mit einem in Fahrzeuglängsrichtung bewegbaren Deckel aus Glas versehenes Dach besitzt; der Deckel ist über eine Heckscheibe bewegbar. Das Dach wird von Dachholmen begrenzt, die in Seitenwänden Integriert sind. Jeder Dachholm wird durch zusammengesetzte, relativ dünnwandige Schalen gebildet und weist auf einer dem Deckel und der Heckscheibe zugekehrten Seite einen Kanal auf. In den Kanal eingesetzt ist eine Führungsschiene für eine Stützschiene des bewegbaren Deckels. Der Raum zwischen Deckel sowie Heckscheibe und einem oberen Begrenzungsbereich des Dachholms ist mittels einer Blende abgedeckt, die oberhalb der Führungsschiene verläuft und im Wesentlichen oberflächenbündig zu dem Deckel in Schließstellung bzw. der Heckscheibe und der oberen Begrenzung des Dachholms ausgerichtet ist.

Aufgabe der Erfindung ist es, seitliche Führungsschienen aufnehmende Dachträger eines Aufbaus und oberhalb der Führungsschienen liegende Abdeckelemente funktionsgerecht und aufwandsarm auszulegen. Dabei sollte aber auch sichergestellt werden, dass das bewegliche Dach problemlos an die Dachträger und die Abdeckelemente anschließbar ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Zusammensetzung des Strukturträgers, des Abdeckelements, der Führungsschiene und des Dichtkörpers im Bereich des jeweiligen seitlichen Dachträgers ein leicht realisierbares, kompaktes und vorbildlich montierbares karosseriebauliches Konstruktionssystem ergibt. Dabei ist der Strukturträger mit der ersten Tragwand und der zweiten Tragwand einfach an die baulichen Gegebenheiten anpassbar, und die Tragwände nehmen sowohl die Führungsschiene wie auch den Profilkörper musterhaft auf. Das Abdeckelement liegt wirkungsgerecht auf der Stützwand der Führungsschiene auf. Und die Haltevorrichtungen einerseits zwischen Abdeckelement und Führungsschiene und andererseits zwischen Abdeckelement und zweiter Tragwand des Strukturträgers stellen eine sichere Verbindung zwischen besagten Bauteilen dar, und Sie ermöglichen, weil Formschluss bewirkend, eine aufwandsarme Montage, d.h. ohne zusätzliche Befestigungsmittel. Schließlich wirkt die Außenseite des Abdeckelements und des Dichtkörpers gezielt, will heißen abschließend und dichtend mit einem flexiblen oder formsteifen Dachabschnitt des beweglichen Dachs zusammen, wenn sich letzteres in der Schließstellung befindet.

In der Zeichnung wird ein Ausführungsbeispiel der Erfindung gezeigt, das nachstehend näher beschrieben wird.

Es zeigen
Fig. 1 eine schematische Schrägansicht von vorne rechts oben auf einen Personenkraftwagen mit einem erfindungsgemäßen Aufbau,
Fig. 2 eine Ansicht von oben auf den Aufbau des Personenkraftwagens,
Fig. 3 eine Einzelheit X der Flg. 1 in größerem Maßstab,
Fig. 4 einen Schnitt etwa nach der Linie IV-IV der Fig. 1 in größerem Maßstab und perspektivischer Ausprägung,
Fig. 5 einen Schnitt nach der Linie V-V der Fig. 1 in größerem Maßstab und perspektivischer Ausprägung.

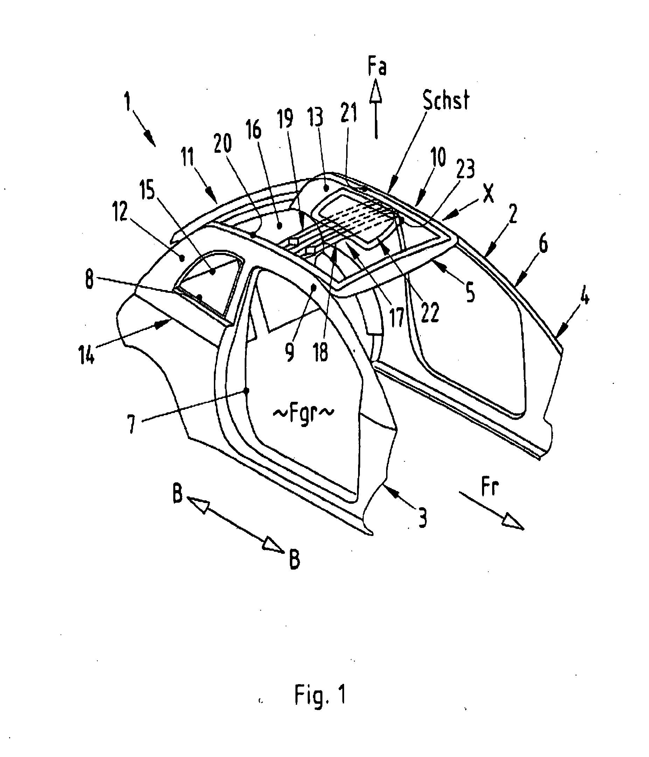

Von einem Personenkraftwagen 1 -Fig. 1- ist lediglich ein Aufbau 2 mit gegenüberliegenden Seitenwänden 3 und 4 und einem oberen Querträger 5 eines Windschutzscheibenrahmens 6 dargestellt. Die je eine Türöffnung 7 und eine Fensteröffnung 8 aufweisenden Seitenwände 3 und 4, die aufrecht stehen und fest mit dem Aufbau 2 verbunden sind, umfassen seitliche Dachträger 9 und 10, die in einem rückwärtigen Bereich 11 des Aufbaus 2 in Säulen 12 und 13 übergehen und auf eine etwa horizontal verlaufende Gürtellinie 14 des besagten Aufbaus stoßen. Die Dachseitenträger 9 und 10, der vordere Querträger 5 und ein benachbart der Gürtellinie 14 verlaufendes hinteres Querteil 15 des Aufbaus 2 begrenzen eine relativ große Dachöffnung 16, in der ein bewegliches Dach 17 in Fahrzeuglängsrichtung B-B verschiebbar angeordnet ist; die Fahrtrichtung ist mit Fr bezeichnet.

Das Dach 17 ist nach Art eines Faltverdecks aufgebaut, wie bspw. in der US 3,658,378 und DE 807 474 beschrieben, und zwischen einer Schließstellung Schst und Offenstellung -nicht gezeigt- und vice versa bewegbar. In der Offenstellung des Dachs 17 ist letzteres in Falten gelegt, weshalb es eine Anzahl quer zur Fahrzeuglängsrichtung B-B verlaufender mit Abstand zueinander angeordneter Spriegel 18 und 19, beide stangenartig, aufweist, Die Spriegel 18 und 19 sind teilweise in Führungsschienen 20 und 21 der Dachseitenrahmen 9 und 10 angeordnet und arbeiten mit einem zur Fahrzeugaußenseite Fa hin weisenden Verdeckbezug 22 sowie einer zum Fahrgastraum Fgr zeigende Innenverkleidung 23 -auch Innenhimmel bezeichnet- zusammen. Zwischen Verdeckbezug 22 und Innenverkleidung 23, beide bestehen aus flexiblem Material, erstrecken sich die Spriegel 18 und 19.

Jeder seitliche Dachträger, z.B. 10, der das Dach 17 begrenzt, weist einen relativ dünnwandigen aus Leichtmetall, Stahl oder dgl. bestehenden Strukturträger 24 mit einem stufenförmig profilierten Querschnitt 25 auf, welcher Strukturträger 24 in den Aufbau 2 fest integriert ist. Der Strukturträger 24 bzw. der Querschnitt 25 umfasst eine erste Tragwand 26 und eine zweite Tragwand 27, die sich in Fahrzeugquerrichtung C-C erstrecken, im Wesentlichen horizontal ausgerichtet sind und mit einer relativ aufrecht verlaufenden Verbindungswand Vw eine Baueinheit bilden. Die erste Tragwand 26 nimmt die Führungsschiene 21 der entsprechenden Spriegel 19 des beweglichen Dachs 17 auf und wird mittels eines zur Fahrzeugoberseite Fo hin weisenden Abdeckelements 28 verkleidet. Das Abdeckelement 28, das sich mit einer nahezu horizontalen Abdeckwand 29 in Fahrzeugquerrichtung C-C erstreckt, und die Führungsschiene 21 sind miteinander verbunden. An einem von der Führungsschiene 21 abgekehrten bzw. zur Fahrzeugaußenseite Fa hin gerichteten Endbereich 30 des Abdeckelements 28 wird es von einem Dichtkörper 31 begrenzt. Ein entgegengesetzt zum Endbereich 30 liegender zum Fahrgastraum Frg hin ausgerichteter Endbereich der Abdeckwand 29 ist mit 32 bezeichnet.

Die Führungsschiene 21, die ein extrudiertes Werkstück sein kann, umfasst mehrere Profilabschnitte und stützt sich mit einer Auflagewand 33 an der ersten Tragwand 26 ab, von welcher Auflagewand 33 ein aufrechter Steg 34 weggeführt ist. Der Steg 34 ist an einer ungefähr horizontalen Stützwand 35 angeformt, auf der die Abdeckwand 29 aufliegt. Die Abdeckwand 29 bzw. das Abdeckelement 28 ist unter Vermittlung von ersten Haltevorrichtungen 36 und zweiten Haltevorrichtungen 37 an der Stützwand 35 gehalten. Die ersten und zweiten Haltevorrichtungen 36 und 37 werden durch Formschluss bewirkende Elemente gebildet. Die Haltevorrichtungen 36 und 37 umfassen erste Stege 38 und zweite Stege 39 und erste Haken 40 und
zweite Haken 41. Die ersten und zweiten Haken 40 und 41 hintergreifen mit Abstand zueinander angebrachte Ränder 42 und 43 der Stützwand 35.

Der Dichtkörper 31 wird unter Zwischenschaltung dritter Haltevorrichtungen 44 und vierter Haltevorrichtungen 45 an dem Abdeckelement 28 und an der zweiten Tragwand 27 in Lage gehalten. Die dritten und vierten Haltevorrichtungen 44 und 45 besitzen Formschluss bewirkende Elemente. Die dritte Haltevorrichtung 44 umfasst einen dritten das Abdeckelement 28 begrenzenden Steg 46 des Abdeckelements 28, der von einem dritten Haken 47 des Dichtkörpers 31 umgriffen wird. Darüber hinaus besitzt die vierte Haltevorrichtung 45 einen vierten Haken 48 des Dichtkörpers 31, welcher vierte Haken 48 mit einem Rand 49 der zweiten Tragwand 27 in Eingriff steht.

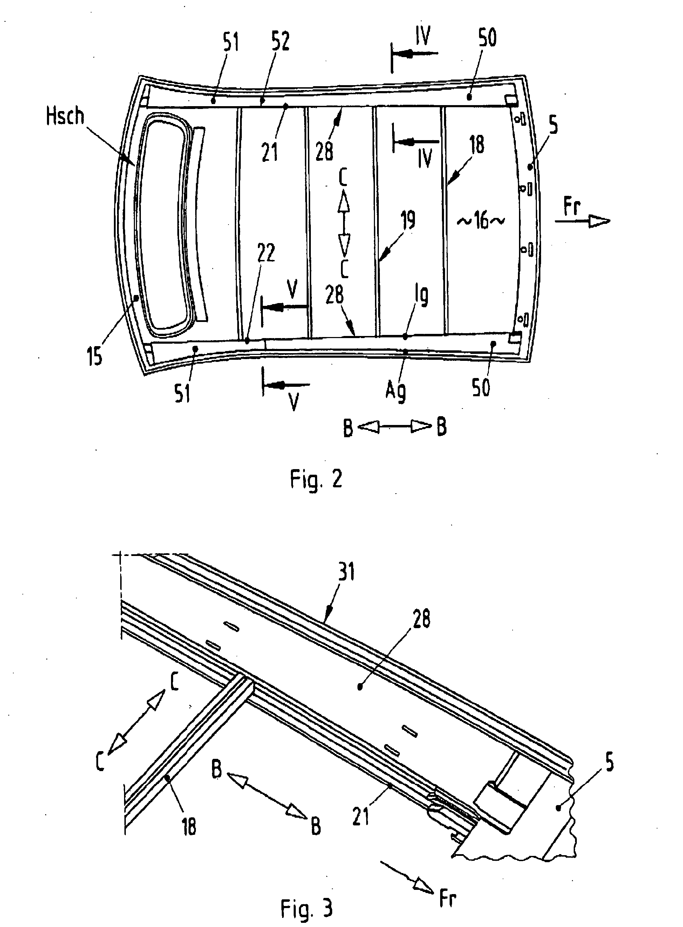

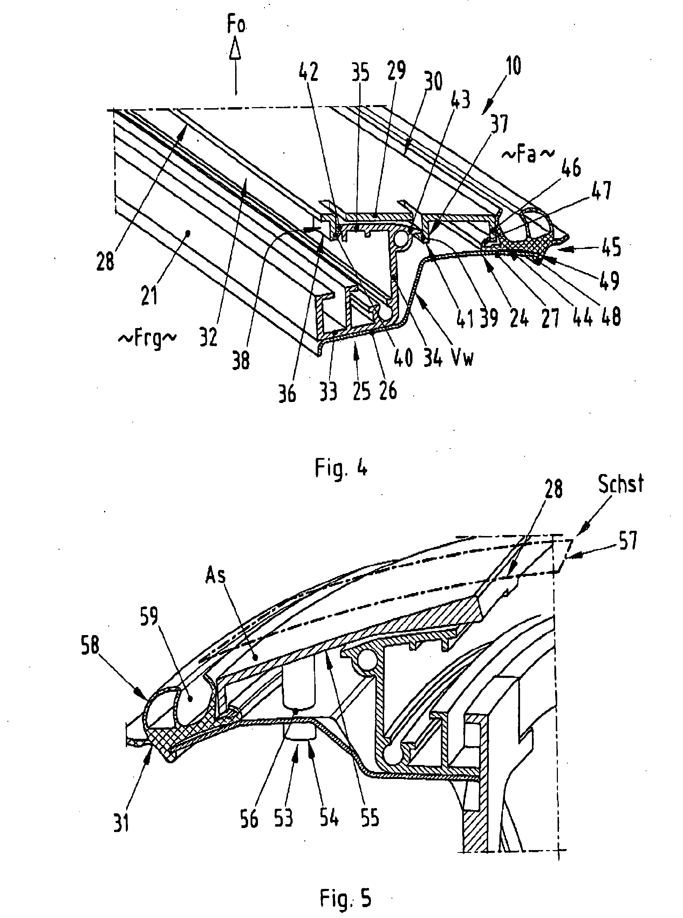

Nach Fig. 2 erstreckt sich das eine geradlinige Innenseite Ig und eine gewölbte Außenseite Ag aufweisende Abdeckelement 28 in Fahrzeuglängsrichtung B-B gesehen zwischen dem vorderen Querträger 5 und dem hinteren Querteil 15, und es ist zweiteilig ausgeführt, anders ausgedrückt, das Abdeckelement 28 setzt sich aus einem vorderen Abdeckteilelement 50 und einem hinteren Abdeckteilelement 51 zusammen, die an einem in Fahrzeugquerrichtung C-C verlaufenden Stoß 52 zusammengeführt sind. Um das Abdeckelement 28 bzw. die Abdeckteüelemente 50 und 51 gemäß konstruktiver Festelegung zum Strukturträger 24 bzw. zueinander montagegerecht einzubauen, ist das Abdeckelement 28 bspw. im Bereich des hinteren Abdeckteilelements 51 zwischen Abdeckelement 28 und dem Strukturträger 24 mit einer Fixierungseinrichtung 53 versehen -Fig. 5-. Letztere weist einen am Abdeckelement 28 angebrachten aufrechten Fixierungszapfen 54 auf, der von einer Innenseite 55 des Abdeckelements 28 weggeführt ist und in eine korrespondierende Ausnehmung 56 der zweiten Tragwand 27 des Strukturträgers 24 eingerückt ist.

Eine Außenseite As des Abdeckelements 28 und des Dichtkörpers 31 dient als Auflage für einen lediglich schematisch dargestellten Dachabschnitt 57 des
beweglichen Dachs 17 -Fig. 5-, der aus flexiblem oder formsteifem Werkstoff bestehen kann. Dieser Dachabschnitt 57 arbeitet in der Schließstellung Schst des Dachs 17 kraftschlüssig und dichtend mit dem Abdeckelement 28 und dem Dichtkörper 31 zusammen, die unterhalb des Abdeckelements 28 liegen. Die entsprechende Kraftschluss- und Dichtfunktion zwischen Dichtabschnitt 57 und Abdeckelement 28 wird durch nicht gezeigte Spannseile, Federelemente oder dgl. erreicht. Schließlich ist der Dichtkörper 31 mit einem Schlauchdichtungsabschnitt 58 und einem Drainageabschnitt 59 versehen, wobei der Schlauchdichtungsabschnitt 58 den Drainageabschnitt 59 zur Fahrzeugaußenseite Fa hin begrenzt.

## Patentansprüche

1. Aufbau (2) mit einem beweglichen Dach (17) für einen Personenkraftwagen (1), das mit einer von seitlichen Dachträgern (9, 10) und Querträgern (5) begrenzten Dachöffnung (16) des Aufbaus (2) zusammenarbeitet und zwischen einer Schließstellung (Schst) und einer Offenstellung verstellbar ist, wovon jeder seitliche Dachträger (9, 10) einen Strukturträger (24) des jeweiligen Dachträgers (9, 10) umfasst, der eine von einem zur Fahrzeugoberseite (Fo) hin weisenden Abdeckelement (28) verkleidete Führungsschiene (20, 21) für das bewegliche Dach (17) besitzt, wobei das Abdeckelement (28) und die auf dem Strukturträger (24) abgestützte Führungsschiene (20; 21) miteinander verbunden sind, wobei eine in Fahrzeugquerrichtung (C-C) verlaufende Abdeckwand (29) des Abdeckelements (28) von einem Dichtkörper (31) begrenzt wird,
**dadurch gekennzeichnet,**
**dass** das Abdeckelement (29) an einer Stützwand (35) der Führungsschiene (20; 21) mittels erster und zweiter Haltevorrichtungen (36 und 37) in Lage gehalten wird.

2. Aufbau nach Anspruch 1, **dadurch gekennzeichnet, dass** der Strukturträger (24) einen profilierten Querschnitt mit einer ersten Tragwand (26) für die Führungsschiene (20, 21) und eine zweite Tragwand (27) für den Dichtkörper (31) aufweist, welche Tragwände (26 und 27) etwa horizontal ausgerichtet sind und in Fahrzeugquerrichtung (C-C) verlaufen.

3. Aufbau nach Anspruch 1 oder 2, **dadurch gekennzeichnet, dass** sich die Stützwand (35) in Fahrzeugquerrichtung (C-C) erstreckt.

4. Aufbau nach den Ansprüchen 1 und 3, **dadurch gekennzeichnet, dass** der Strukturträger (24) in den Aufbau (2) fest integriert ist.

5. Aufbau nach einem der Ansprüche 1 bis 4, **dadurch gekennzeichnet, dass** die ersten und zweiten Haltevorrichtungen (36 und 37) zwischen Stützwand (35) und Abdeckelement (28) Formschluss bewirkende Elemente besitzen.

6. Aufbau nach einem der Ansprüche 1 bis 5, **dadurch gekennzeichnet, dass** die Haltevorrichtung (36) erste und zweite Stege (38 und 39) und erste und zweite Haken (40) am Abdeckelement (28) besitzt, welche erste und zweite Haken (40 und 41) beabstandete Ränder (42 und 43) der Stützwand (35) der Führungsschiene (20; 21) hintergreifen.

7. Aufbau nach einem oder mehreren der vorangehenden Ansprüche, **dadurch gekennzeichnet, dass** der Dichtkörper (31) unter Vermittlung dritter Haltevorrichtungen (44) und vierter Haltevorrichtungen (45) am Abdeckelement (28) und an der zweiten Tragwand (27) in Lage gehalten wird.

8. Aufbau nach Anspruch 7, **dadurch gekennzeichnet, dass** die dritten Haltevorrichtungen (44) und vierten Haltevorrichtungen (45) Formschluss bewirkende Elemente besitzen.

9. Aufbau nach einem oder mehreren der vorangehenden Ansprüche, **dadurch gekennzeichnet, dass** die dritte Haltevorrichtung (44) einen dritten Steg (46) des Abdeckelements (28) Umfasst, der von einem dritten Haken (47) des Dichtkörpers (31) hintergriffen wird.

10. Aufbau nach einem oder mehreren der vorangehenden Ansprüche, **dadurch gekennzeichnet, dass** die vierte Haltevorrichtung (45) einen vierten Haken (48) des Dichtkörpers (31) umfasst, der einen Rand (49) der zweiten Tragwand (27) des Strukturträgers (24) hintergreift.

11. Aufbau nach einem oder mehreren der vorangehenden Ansprüche, **dadurch gekennzeichnet, dass** das Abdeckelement (28) mit einem zur zweiten Tragwand (27) des Strukturträgers (24) hin gerichteten Fixierzapfen (54) versehen ist, der in eine korrespondierende Ausnehmung (56) der besagten zweiten Tragwand (27) eingreift.

12. Aufbau nach Anspruch 1, **dadurch gekennzeichnet, dass** in der Schließstellung (Schst) des beweglichen Dachs (17) auf der Außenseite (As) des Abdeckelements (28) und des Dichtkörpers (31) ein Dachabschnitt (57) des besagten beweglichen Dachs (17) ruht.

13. Aufbau nach Anspruch 12, **dadurch gekennzeichnet, dass** der Dachabschnitt (57) aus flexiblem oder formsteifem Werkstoff besteht.

14. Aufbau nach Anspruch 1, **dadurch gekennzeichnet, dass** der Dichtkörper (31) einen Schlauchdichtabschnitt (58) und einen Drainageabschnitt (59) aufweist, die aus einem Stück hergestellt sind.

15. Aufbau nach Anspruch 1, **dadurch gekennzeichnet, dass** das Abdeckelement (28) sich zwischen einem vorderen Querträger (5) und einem hinteren Querträger (15) des Aufbaus (2) erstreckt und über seine Länge betrachtet mehrteilig oder aus einem Stück hergestellt ist.

## Claims

1. Assembly (2) with a mobile roof (17) for a passenger vehicle (1), the roof cooperating with a roof opening (16), which is bounded by lateral roof supports (9, 10) and transverse supports (5), in the body (2) and being displaceable between a closed position (Schst) and an open position, of which each lateral roof support (9, 10) comprises a structure support (24) for the particular roof support (9, 10), the structure support having a guide rail (20, 21) for the movable roof (17), the guide rail being lined by a covering element (28) pointing towards the vehicle upper side (Fo), wherein the covering element (28) and the guide rail (20; 21) supported on the structure support (24) are connected to each other, wherein a covering wall (29) of the covering element (28), the covering wall running in the vehicle transverse direction (C-C), being bounded by a sealing body (31), **characterized in that** the covering element (29) is held in position on a supporting wall (35) of the guide rail (20; 21) by means of first and second holding devices (36 and 37).

2. Assembly according to Claim 1, **characterized in that** the structure support (24) has a profiled cross section with a first bearing wall (26) for the guide rail (20, 21) and a second bearing wall (27) for the sealing body (31), which bearing walls (26 and 27) are oriented approximately horizontally and run in the vehicle transverse direction (C-C).

3. Assembly according to Claim 1 or 2, **characterized in that** the supporting wall (35) extends in the vehicle transverse direction (C-C).

4. Assembly according to Claims 1 and 3, **characterized in that** the structure support (24) is fixedly integrated in the body (2).

5. Assembly according to one of Claims 1 to 4, **characterized in that** the first and second holding devices (36 and 37) have elements bringing about a form-fitting connection between the supporting wall (35) and covering element (28).

6. Assembly according to one of Claims 1 to 5, **characterized in that** the holding device (36) has first and second webs (38 and 39) and first and second hooks (40) on the covering element (28), which first and second hooks (40 and 41) engage behind spaced-apart edges (42 and 43) of the supporting wall (35) of the guide rail (20; 21).

7. Assembly according to one or more of the preceding claims, **characterized in that** the sealing body (31) is held in position on the covering element (28) and on the second bearing wall (27) with the aid of third holding devices (44) and fourth holding devices (45).

8. Assembly according to Claim 7, **characterized in that** the third holding devices (44) and fourth holding devices (45) have elements bringing about a form-fitting connection.

9. Assembly according to one or more of the preceding claims, **characterized in that** the third holding device (44) comprises a third web (46) of the covering element (28), which web is engaged behind by a third hook (47) of the sealing body (31).

10. Assembly according to one or more of the preceding claims, **characterized in that** the fourth holding device (45) comprises a fourth hook (48) of the sealing body (31), which hook engages behind an edge (49) of the second bearing wall (27) of the structure support (24).

11. Assembly according to one or more of the preceding claims, **characterized in that** the covering element (28) is provided with a fixing pin (54) which is directed towards the second bearing wall (27) of the structure support (24) and engages in a corresponding recess (56) in said second bearing wall (27).

12. Assembly according to Claim 1, **characterized in that**, in the closed position (Schst) of the movable roof (17), a roof section (57) of said movable roof (17) rests on the outer side (As) of the covering element (28) and of the sealing body (31).

13. Assembly according to Claim 12, **characterized in that** the roof section (57) is composed of flexible or dimensionally stable material.

14. Assembly according to Claim 1, **characterized in that** the sealing body (31) has a tubular sealing section (58) and a drainage section (59), which sections are produced from a single piece.

15. Assembly according to Claim 1, **characterized in that** the covering element (28) extends between a front transverse support (5) and a rear transverse support (15) of the body (2) and, viewed over its length, is produced in multiple parts or from a single piece.

## Revendications

1. Montage (2) doté d'un toit mobile (17) pour une véhicule de transport de personnes (1), qui coopère avec une ouverture de toit (16) de la carrosserie (2), laquelle ouverture de toit est délimitée par des longerons de toit latéraux (9, 10) et des traverses (5), et qui peut être déplacé entre une position de fermeture (Schst) et une position d'ouverture, chacun de ses longerons de toit latéraux (9, 10) comportant un support structural (24) du longeron de toit respectif (9, 10) qui possède un rail de guidage (20, 21), pour le toit mobile (17), revêtu d'un élément de recouvrement (28) tourné vers le côté supérieur du véhicule (Fo), l'élément de recouvrement (28) et le rail de guidage (20 ; 21) s'appuyant sur le support structural (24) étant reliés l'un à l'autre, une paroi de recouvrement (29), s'étendant dans la direction transversale du véhicule (C-C), de l'élément de recouvrement (28) étant délimitée par un corps d'étanchéité (31),
**caractérisée en ce que**
l'élément de recouvrement (29) est maintenu en position contre une paroi d'appui (35) du rail de guidage (20 ; 21) au moyen de premiers et deuxièmes dispositifs de retenue (36 et 37).

2. Carrosserie selon la revendication 1, **caractérisée en ce que** le support structural (24) présente une section transversale profilée comprenant une première paroi de support (26) pour le rail de guidage (20, 21) et une deuxième paroi de support (27) pour le corps d'étanchéité (31), lesquelles parois de support (26 et 27) sont orientées approximativement horizontalement et s'étendent dans la direction transversale du véhicule (C-C).

3. Montage selon la revendication 1 ou 2, **caractérisée en ce que** la paroi d'appui (35) s'étend dans la direction transversale du véhicule (C-C).

4. Montage selon les revendications 1 et 3, **caractérisée en ce que** le support structural (24) est intégré fixement dans la carrosserie (2).

5. Montage selon l'une quelconque des revendications 1 à 4, **caractérisée en ce que** les premiers et deuxièmes dispositifs de retenue (36 et 37) possèdent des éléments produisant un engagement par correspondance géométrique entre la paroi d'appui (35) et l'élément de recouvrement (28).

6. Montage selon l'une quelconque des revendications 1 à 5, **caractérisée en ce que** le dispositif de retenue (36) possède des première et deuxième nervures (38 et 39) et des premier et deuxième crochets (40) sur l'élément de recouvrement (28), lesquels premier et deuxième crochets (40 et 41) viennent en prise par l'arrière avec des bords espacés (42 et 43) de la paroi d'appui (35) du rail de guidage (20 ; 21).

7. Montage selon l'une quelconque ou plusieurs des revendications précédentes, **caractérisée en ce que** le corps d'étanchéité (31) est maintenu en position contre l'élément de recouvrement (28) et contre la deuxième paroi de support (27) par l'intermédiaire de troisièmes dispositifs de retenue (44) et de quatrièmes dispositifs de retenue (45).

8. Montage selon la revendication 7, **caractérisée en ce que** les troisièmes dispositifs de retenue (44) et les quatrièmes dispositifs de retenue (45) possèdent des éléments produisant un engagement par complémentarité de formes.

9. Montage selon l'une quelconque ou plusieurs des revendications précédentes, **caractérisée en ce que** le troisième dispositif de retenue (44) comporte une troisième nervure (46) de l'élément de recouvrement (28) avec laquelle vient en prise par l'arrière un troisième crochet (47) du corps d'étanchéité (31).

10. Montage selon l'une quelconque ou plusieurs des revendications précédentes, **caractérisée en ce que** le quatrième dispositif de retenue (45) comporte un quatrième crochet (48) du corps d'étanchéité (31) qui vient en prise par l'arrière avec un bord (49) de la deuxième paroi de support (27) du support structural (24).

11. Montage selon l'une quelconque ou plusieurs des revendications précédentes, **caractérisée en ce que** l'élément de recouvrement (28) est pourvu d'une cheville de fixation (54) orientée en direction de la deuxième paroi de support (27) du support structural (24), laquelle cheville de fixation vient en prise dans un évidement correspondant (56) de ladite deuxième paroi de support (27).

12. Montage selon la revendication 1, **caractérisée en ce que**, dans la position de fermeture (Schst) du toit mobile (17), une section de toit (57) dudit toit mobile (17) repose sur le côté extérieur (As) de l'élément de recouvrement (28) et du corps d'étanchéité (31).

13. Montage selon la revendication 12, **caractérisée en ce que** la section de toit (57) est constituée d'un matériau souple ou de forme rigide.

14. Montage selon la revendication 1, **caractérisée en ce que** le corps d'étanchéité (31) comprend une section d'étanchéité tubulaire (58) et une section de drainage (59) qui sont fabriquées en une seule pièce.

15. Montage selon la revendication 1, **caractérisée en ce que** l'élément de recouvrement (28) s'étend entre une traverse avant (5) et une traverse arrière (15) de la carrosserie (2) et, considéré sur sa longueur, est fabriqué en plusieurs parties ou en une seule pièce.
